# FASCICULE DE BREVET EUROPEEN

(11) **EP 1 716 666 B1**
(45) Date de publication et mention de la délivrance du brevet: **13.07.2016**
(21) Numéro de dépôt: 05729325.0
(22) Date de dépôt: 16.02.2005
(51) Int. Cl.: H04L 12/18, H04L 12/28

(54) **PROCEDE D'ACCES A UN SERVICE A TRAVERS UN RÉSEAU D'ACCES MULTIVOIES**
VERFAHREN ZUM ZUGREIFEN AUF EINEN DIENST DURCH EIN MEHRKANALIGES ZUGANGSNETZ
METHOD FOR ACCESSING TO A SERVICE THROUGH A MULTICHANNEL ACCESS NETWORK

(30) Priorité: 19.02.2004 FR 0450315
(43) Date de publication de la demande: 02.11.2006
(73) Titulaire: Orange, 75015 Paris (FR)
(72) Inventeur: LEVESQUE, Thierry, F-35131 Chartres de Bretagne (FR); LE BOITE, Jean-François, F-35580 Guichen (FR); QUENARD, Philippe, F-35690 Acigne (FR)
(74) Mandataire: Simon, Viviane
(86) Numéro de dépôt international: PCT/FR2005/000354
(87) Numéro de publication internationale: WO 2005/091559

(56) Documents cités:
- EP-A- 1 298 836
- WO-A-98/24224
- WO-A-03/067821

## Description

La présente invention concerne un procédé d'accès, à travers un réseau d'accès multivoies, d'un terminal à un service mis à disposition sur un réseau de communication par un fournisseur de services.

L'invention trouve une application particulièrement avantageuse dans le domaine de la fourniture de services, notamment sur le réseau Internet, lorsque l'accès au service est réalisé à travers un réseau d'accès multicanal ou à travers une pluralité d'interfaces du terminal. On dit alors que l'accès au service se fait au travers d'un réseau d'accès « multivoies ».

Bien que l'invention s'applique à tout type de réseau de communication, on se placera dans la suite de ce mémoire dans le cas du réseau Internet. Le service auquel le terminal cherche à accéder sera noté service IP (Internet Protocol).

Le cadre général de l'invention est donc celui où un fournisseur de services souhaite voir transporter un service IP comme, par exemple, une vidéo en « stream » ou en téléchargement, jusqu'à des terminaux clients connectés à un réseau d'accès IP multicanal ou à travers une pluralité d'interfaces du terminal vers des réseaux d'accès IP. On appellera « voie » indifféremment un canal d'un réseau d'accès multicanal ou une interface du terminal. Le document WO 98/24224 A1 divulgue un procédé d'accès pour fournir l'accés à des services de communication.

Un réseau d'accès est appelé, par la suite, réseau d'accès multicanal s'il contient soit un support physique avec plusieurs canaux logiques, soit plusieurs supports physiques. On appellera alors « canal » indifféremment un ensemble support physique/canal logique ou un des supports physiques.

Parmi les réseaux d'accès multicanal connus, on peut citer le réseau DAB (Digital Audio Broadcasting) et le réseau DVB (Digital Video Broadcasting).

D'une manière générale, le terminal-client découvre le service IP auprès d'une fonction appelée « Offre de service ». Au préalable, les informations transmises par le fournisseur renseignent, aujourd'hui, un module de médiation, et donc le terminal, sur la connexion IP, à savoir l'(es) adresse(s) IP associée(s) à un port TCP/UDP (Transfer Control Protocol/User Datagram Protocol)) et les caractéristiques de l'application à utiliser pour traiter un service donné, par exemple les caractéristiques de décodage pour un service vidéo et les caractéristiques de l'application de téléchargement.

Il faut noter que plusieurs connexions correspondant à plusieurs flux IP peuvent être nécessaires pour «consommer» un service IP donné, par exemple une connexion pour la vidéo, une autre pour l'audio dans le cas d'un service IP audio/vidéo. Par la suite, on fera l'hypothèse que le service IP ne contient qu'un flux IP. L'invention s'étend néanmoins par analogie au cas de plusieurs flux IP associés au service.

S'agissant d'un accès à un service IP à travers un réseau multicanal, la description du service est habituellement faite par le fournisseur de services dans un fichier du type SDP (Service Description Protocol recommandé par l'IETF (Internet Engineering Task Force)), mais n'inclut aucune information sur les caractéristiques du réseau d'accès multicanal à utiliser, notamment le canal (support physique/canal logique) à utiliser.

Traditionnellement, on utilise les mécanismes de configuration de réseau du terminal (tables de routage, configuration réseau des interfaces) afin de trouver le chemin de communication vers un service IP donné. Cependant, dans le cas par exemple où il n'y a pas de configuration réseau associée préalablement aux canaux logiques, comme c'est effectivement le cas des réseaux de diffusion DVB, DAB, ces techniques traditionnelles sont inopérantes.

Néanmoins, pour éviter à l'utilisateur d'avoir à rechercher systématiquement le chemin de communication adéquat vers le service IP parmi l'ensemble des canaux existants, les paramètres de connexion au réseau d'accès doivent être connus du terminal afin de s'accorder tout de suite sur le bon canal (couple support physique/canal logique).

Par exemple, le fournisseur du service IP envoie son contenu au travers d'un réseau d'accès à une adresse IP notée @ associée à un port *P*. En parallèle, le fournisseur du service IP présente au terminal, lors de la découverte du service IP, la description de ce service en lui fournissant, par exemple pour un servi*ce* multicast, les informations @ et *P* et la nature de l'application *App* à utiliser.

Dans le cas d'un réseau d'accès multicanal de type DAB, les équipements du réseau d'accès (passerelles d'encapsulation IP dans des multiplex DAB) encapsulent le flux IP (@, *P*) dans un ensemble multiplex E, dans un sous-canal S de ce multiplex, et dans un paquet Pa de ce sous-canal.

Le terminal ne peut se connecter au service IP (@, *P*) qu'à condition que sa configuration au réseau d'accès DAB corresponde aux paramètres (E, S, Pa) choisis par l'opérateur du réseau d'accès.

Dans le cas d'un réseau d'accès multicanal DAB, la signalisation envoyée aujourd'hui par les équipements du réseau d'accès utilise l'identifiant (Service Id, Service component Ids), qu'on notera par la suite (Sld, SCIds), caractérisant de façon unique une composante de service dans un réseau DAB, sachant qu'un flux IP donné est transporté dans une composante unique de service.

Cet identifiant reste invariant quelles que soient les opérations de multiplexage/remultiplexage. La signalisation du réseau d'accès DAB relie le couple (Sld, SClds) aux supports physiques et aux canaux logiques utilisés dans le système de transport DAB (ensemble E, sous-canal S, paquet Pa). Ainsi, à condition de connaître le couple (Sld, SClds) associé à un service IP donné, le terminal peut connaître, via la signalisation reçue du réseau d'accès, le canal (support physique/canal logique) de connexion au service IP désiré.

Aujourd'hui, l'utilisateur doit sélectionner manuellement de manière empirique, ou de manière statique par contrat, les paramètres d'accès au réseau DAB, par exemple en sélectionnant le nom du service DAB et le nom du "service component".

Le terminal est alors accordé sur le bon support physique et le bon canal logique, l'extraction des données IP peut donc se faire en accord avec la description de service, concernant les informations de niveau applicatif et la connexion IP, fournie par le fournisseur de services IP.

Dans le cas d'un réseau multicanal DVB, une nouvelle table, dite table INT, a été définie dans la spécification ETSI EN 301 192 v1.3.1 (2003-05). Cette table est mise à jour dynamiquement par les équipements du réseau DVB (passerelles d'encapsulation IP dans DVB, multiplexeur/remultiplexeur) et donne un lien entre les services IP encapsulés (définis par exemple par les adresses IP destination et source) et le canal (support physique/canal logique) qui les transporte.

La découverte par le terminal du service IP est faite indépendamment. Néanmoins, une partie des informations de découverte d'un service IP, notamment les caractéristiques de la connexion IP, comme les adresse IP destination et source, doivent être renseignées dans la signalisation DVB afin d'effectuer un lien avec le canal d'accès.

Toutefois, ces solutions connues proposées pour accéder à un service IP à travers un réseau d'accès multicanal présentent chacun un certain nombre d'inconvénients.

Concernant le réseau DAB, on constate qu'aujourd'hui le client doit, dans deux opérations séparées et indépendantes, découvrir, d'un côté, les services IP, et configurer l'interface de connexion au réseau d'accès, de l'autre.

L'utilisation du réseau d'accès DAB pour transporter des services IP est récente et reste souvent expérimentale. Un processus où le client apprend de façon "statique" (au travers d'un contrat par exemple) sur quel canal DAB défini par le couple (Sld, SClds) sont véhiculés les flux IP peut convenir.

Dans un environnement plus dynamique, l'affectation d'un service IP à un couple (Sld, SClds) peut ne pas être connue en temps réel par le client. En outre, l'ergonomie d'une configuration manuelle peut rapidement être inconfortable au cas où le passage d'un service IP donné à un autre nécessite quasiment systématiquement une reconfiguration de l'interface de connexion au réseau d'accès.

Concernant le réseau DVB, la table INT de la signalisation DVB indique dynamiquement la localisation du service IP donné, mais le terminal doit analyser de façon croisée deux types de signalisation, à savoir les informations de découverte de services et les informations de la table INT. L'identifiant caractérisant le service IP doit être dupliqué dans les deux signalisations, entraînant donc une surcharge d'informations alourdissant de façon notable la signalisation DVB et augmentant aussi le temps d'analyse du terminal.

Dans le cas d'un terminal ayant plusieurs interfaces de réseaux d'accès, une difficulté peut apparaître lors du choix de l'interface à laquelle le terminal du client devra se connecter pour recevoir un service IP multicast donné, à savoir le cas où le service n'est accessible qu'au travers d'un réseau d'accès non prévisible a priori par le terminal.

Aussi, le problème technique à résoudre par l'objet de la présente invention est de proposer un procédé d'accès, à travers un réseau d'accès multivoies, d'un terminal à un service mis à disposition sur un réseau de communication par un fournisseur de services, qui permettrait, dans les cas où l'accès à un service IP ne peut être connue à l'avance par le terminal, par exemple si elle dépend de la mise en oeuvre non prédictible du service IP dans un réseau d'accès multivoie, de fournir au terminal en même temps que la découverte du service IP (exemple dans un fichier SDP), les informations qui lui permettront de s'accorder automatiquement, et sans création de tables chez l'opérateur d'accès, sur le bon canal (support physique/canal logique) du réseau d'accès ou la bonne interface à un réseau d'accès. Ces informations seront à jour au moment de la découverte de services. Si en outre on utilise un identifiant invariant dans le temps et dans l'espace, les informations transmises au moment de la première découverte du service resteront à jour pendant toute la durée du service.

La solution au problème technique posé consiste, selon la présente invention, en ce que ledit procédé d'accès comprend les étapes consistant :
- pour le fournisseur de services, à fournir à un module de médiation des informations concernant au moins des données relatives à l'adresse dudit service dans le réseau de communication,
- pour le module de médiation, à déterminer au moins un identifiant de voie à utiliser par le terminal pour accéder audit service, et à associer ledit identifiant de voie auxdites informations fournies par le fournisseur de services,
- pour le terminal, à recevoir du module de médiation, lors de la découverte du service, ledit identifiant de voie associé auxdites informations.

Comme on le verra en détail plus loin, l'accès du terminal au service IP peut se résumer de la manière suivante dans le cas, par exemple, de services IP multicast sur un réseau d'accès multicanal DAB.

Dans une première phase, le fournisseur de services IP qui souhaite offrir un service auprès d'un opérateur de réseau d'accès fournit à un module de médiation la description de son service qui comporte les éléments que l'on trouve dans un fichier SDP standard, à savoir :
- des informations de niveau applicatif, comme nom et description littérale du service, date de diffusion du service, application nécessaire pour décoder le service, type de codecs,...
- des informations de niveau réseau, comme adresse IP multicast et port UDP nécessaire pour communiquer avec le service IP multicast.

Si les informations de description de services ci-dessus ne suffisent pas à expliciter la demande de ressources, des informations complémentaires sont ajoutées, comme par exemple l'identifiant du service auquel est associé le service IP, tel que le service France Inter sur DAB.

Dans une deuxième phase, le module de médiation, grâce à la description du service fournie par le fournisseur de service IP, envoie des commandes vers l'opérateur de réseau d'accès qui active les ressources de transport IP qui vont permettre de transporter le service IP dans un canal donné. Un exemple d'activation des ressources de transport IP est la commande des passerelles d'encapsulation de données IP dans le réseau d'accès en utilisant les éléments caractérisant le service IP (adresse IP, port) et le canal de transport du service IP. Conformément à l'invention, la fonction de contrôle du réseau d'accès retourne au module de médiation le canal qui transportera le service IP. Le module de médiation associe alors l'information de canal aux autres informations reçues du fournisseur de service.

Dans une troisième phase, le client découvre le service au moyen de son terminal. L'information qu'il reçoit par SDP par exemple contient au minimum:
- les informations de niveau applicatif (codecs,...),
- les informations de niveau réseau (adresse IP multicast, port),
- et, conformément à l'invention, le lien avec le canal d'accès, par exemple l'identifiant Sld de service DAB et l'identifiant SClds de la composante de service.

Enfin, dans une quatrième phase, le terminal se connecte au service IP à l'aide de ces paramètres. Dans le cas d'un réseau multicanal, le terminal s'accorde sur le canal correspondant auxdits paramètres. Dans le cas d'une pluralité d'interfaces, le terminal peut configurer de façon dynamique les paramètres réseau du terminal et même fournir aux applications l'interface réseau d'accès au service correspondant auxdits paramètres.

La description qui va suivre en regard des dessins annexés, donnés à titre d'exemples non limitatifs, fera bien comprendre en quoi consiste l'invention et comment elle peut être réalisée.
La figure 1 est un schéma d'un système de communication entre le serveur d'un fournisseur de services et un terminal, destiné à la mise en oeuvre du procédé d'accès conforme à l'invention.
La figure 2 est un schéma sur lequel sont représentées les étapes du procédé d'accès conforme à l'invention dans le cas du réseau d'accès DAB.
La figure 3 est un schéma sur lequel sont représentées les étapes du procédé d'accès conforme à l'invention dans le cas d'un accès du terminal au service IP à travers une pluralité d'interfaces.

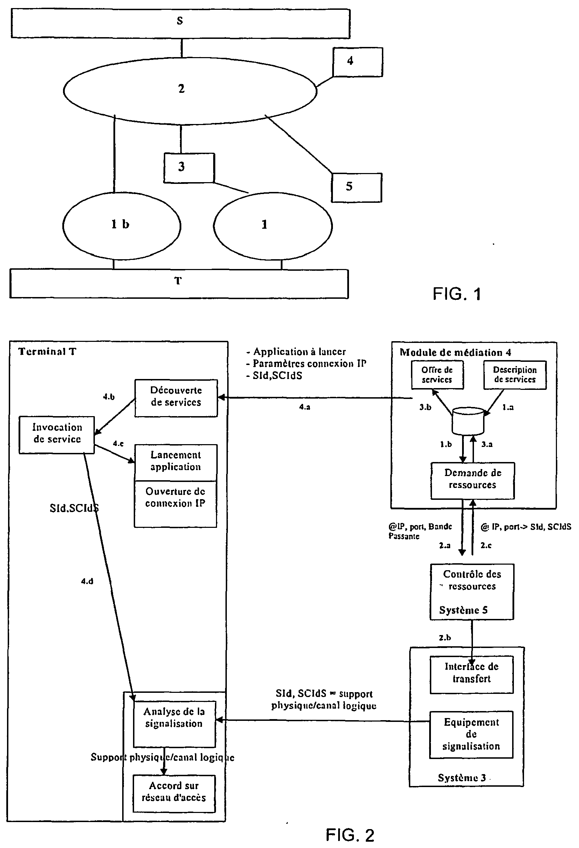

Le système de communication de la figure 1 est destiné à permettre l'accès d'un terminal T, tel qu'un ordinateur personnel d'un client, à un service d'un fournisseur de services distribué par un serveur S de contenus IP à travers un réseau 2 de communication, par exemple le réseau Internet.

Pour accéder au service IP souhaité, le terminal T utilise un réseau 1 d'accès multivoies qui, dans la suite de la description, sera le réseau d'accès multicanal DAB.

En liaison avec le réseau 1, un système 3 abrite les interfaces de transfert vers le réseau d'accès multicanal (passerelles d'encapsulation de données IP sur support DAB par exemple) qui aiguilleront les flux de données IP sur un canal défini par un ensemble support physiqué/canal logique du réseau 1 d'accès.

Eventuellement, le système 3 comporte des équipements de signalisation propres au réseau 1 d'accès. Cette signalisation optionnelle permet de donner les caractéristiques finales de localisation d'un service IP que le réseau 1 d'accès est parfois le seul à connaître. Dans l'exemple d'un service IP multicast transporté sur un réseau d'accès DAB, le recours à la signalisation du réseau d'accès DAB est obligatoire : c'est elle qui fournira le lien entre un couple (Sld, SClds) et le canal au sein des multiplex DAB .

Le système 4 est un module de médiation qui abrite les fonctions de signalisation auxquelles fait appel le fournisseur S de services IP. Le module 4 de médiation peut appartenir au fournisseur de services lui-même ou une autre une entité tierce à laquelle il fait appel.

Le système 5 abrite les fonctions de contrôle des ressources propres au réseau 1 d'accès multicanal.

Le réseau 1 b est facultatif. Il permet au terminal T de dialoguer avec le module 4 de médiation par un autre réseau d'accès que le réseau 1 d'accès multicanal. Ce sera le cas par exemple lorsque le terminal T veut envoyer des messages vers le système 4 alors que le réseau 1 d'accès multicanal ne permet que la transmission des messages de l'interface 3 vers le terminal T. Cette situation se présente effectivement pour le réseau DAB qui est unidirectionnel dans le sens émetteur vers récepteur.

Les échanges de données et d'informations au sein du système de communication de la figure 1 s'effectuent de la manière suivante..

Les données échangées du serveur S de contenus IP vers le terminal T transitent par le réseau 2, puis l'interface 3 et le réseau 1 d'accès multicanal.

Le module 4 de médiation dialogue avec le système 5 au travers du réseau 2.

Le système 5 dialogue avec l'interface 3 au travers du réseau 2.

Le module 4 de médiation dialogue avec le terminal T au travers du réseau 2 puis du réseau 1 ou du réseau 1 b.

Les étapes du procédé d'accès conforme à l'invention vont maintenant être décrites en détail en regard de la figure 2 relativement à un accès multicanal.
1.a - Le fournisseur de services IP souhaite distribuer son service IP jusqu'à des terminaux clients, tel que le terminal T. Pour cela, il fait appel au module 4 de médiation, lequel peut être sous-traité chez un tiers ou intégré au serveur du fournisseur de services. Pour cela, le fournisseur S fournit à la fonction "Description de services" du module 4 les éléments de description de son service IP.
   Les éléments fournis sont ceux que l'on trouve dans un fichier de description SDP (RFC 327 de l'IETF) standard: à savoir:
   - des informations de niveau applicatif: nom et description littérale du service, date de diffusion du service, application nécessaire pour décoder le service, type de codecs, etc,
   - des données de niveau réseau: adresse IP multicast et port UDP nécessaire pour communiquer avec le service IP multicast.

   Si les informations de description de service ne suffisent pas à expliciter la demande de ressources, des informations complémentaires sont ajoutées afin de compléter le cas échéant l'appel à la demande de ressources effectuée lors de l'étape 1.b. Pour un service IP multicast sur DAB, ces informations complémentaires sont, par exemple, le fait que le fournisseur de services souhaite diffuser son service sur une technologie DAB, le label du service radio auquel le service IP est rattaché, la bande passante nécessaire, la zone géographique où le service sera opéré, l'opérateur de réseau d'accès souhaité, etc.
   La fonction "Description de services" du module 4 de médiation stocke la description du service dans la base de données du module.
1.b - La fonction «Demande de ressources» du module 4 de médiation est informée de l'existence d'un nouveau service IP pour lequel une demande de ressources est nécessaire. La fonction «Demande de ressources» doit alors sélectionner l'opérateur de réseau 1 d'accès.
   Elle doit ensuite sélectionner les informations qui caractériseront auprès de l'opérateur du réseau 1 d'accès la demande de ressources: par exemple les adresses IP et port du flux IP, et un certain nombre d'éléments complémentaires comme la bande passante désirée.
2.a - La fonction "Activation des ressources" du système 5 reçoit la demande de ressources.
2.b - Au cas où la demande est recevable, par exemple si la bande passante nécessaire est disponible dans les ressources d'accès DAB, le système 5 envoie des ordres vers les équipements 3 de transfert afin que le service IP puisse être transporté sur le réseau 1 d'accès dans un canal donné (physique donné et un canal logique donné). Les informations transmises aux équipements 3 sont celles qui caractérisent le service IP (exemple (adresse IP, port)) ainsi qu'une désignation du support physique/canal logique sur lequel devra être véhiculé le service IP.
2.c - En réponse à la demande de ressources effectuée en 2.a, la fonction «Contrôle de ressources» du système 5 fournit l'identifiant permettant de déterminer le canal qui sera utilisé pour transporter le service IP sur le réseau 1 d'accès multicanal. Par la suite, ce champ sera appelé « identifiant de localisation du canal dans le réseau d'accès ». En DAB, cet identifiant représente le couple (Sld, SClds).
3.a - La fonction "Demande de ressources" du module 4 de médiation met à jour la base de données du module en associant aux informations de description du service IP le champ « identifiant de localisation du canal dans le réseau d'accès ».
3.b - La fonction "Offre de services" du module 4 est informée qu'elle doit créer un fichier de découverte de services associé au service IP. Si la découverte de services est faite au travers d'un fichier SDP, ce fichier contiendra les champs présents dans la base de données et reçus par la fonction découverte de services (champs d'un fichier SDP standard) et le nouveau champ « identifiant de localisation du canal dans le réseau d'accès ». Ce champ est placé dans une description SDP de niveau média, au cas où il y aurait plusieurs médias et donc plusieurs flux IP associés au service I P.
4.a - Le terminal client T par sa fonction "Découverte de services" découvre le service IP :
   - soit en envoyant une requête auprès de la fonction "Offre de services" du module 4, en téléchargeant par exemple le fichier SDP sur un serveur WEB mis à jour par la fonction "Offre de services" du module 4,
   - soit par l'envoi des informations par la fonction "Offre de services" vers le terminal T au travers d'un protocole comme SAP/SDP (RFC 2974).
4.b - La fonction "Invocation de service", qui peut être sollicitée au moment où l'utilisateur sélectionne sur l'interface graphique du terminal T le service IP (clic sur un icône par exemple), traite le fichier de découverte de services (fichier SDP par exemple), et donc le champ « identifiant de localisation du canal dans le réseau d'accès ».
4.c - La fonction "Invocation de service" du terminal T lance l'application en lui fournissant les paramètres présents dans le fichier de découverte de services et qui lui sont nécessaires. Grâce aux paramètres de communication IP (classiquement adresse(s) IP et port), l'application ouvre la connexion IP.
4.d - La fonction "Invocation de service" communique par une interface de type API avec la carte du terminal de connexion au réseau 1 d'accès et lui fournit les paramètres présents dans le champ « identifiant de localisation du canal dans le réseau d'accès ».

Au niveau de la carte de connexion au réseau 1 d'accès, le recours à une analyse de la signalisation est optionnelle, mais obligatoire dans le cas d'un réseau DAB.

Au moment où la carte du terminal T est accordée sur le bon canal (support physique/canal logique), les données IP issues du serveur S de services au travers des équipements du réseau 1 d'accès physique sont reçues par la carte de réception du terminal T et traitées par l'application désirée (lecteur de vidéo par exemple).

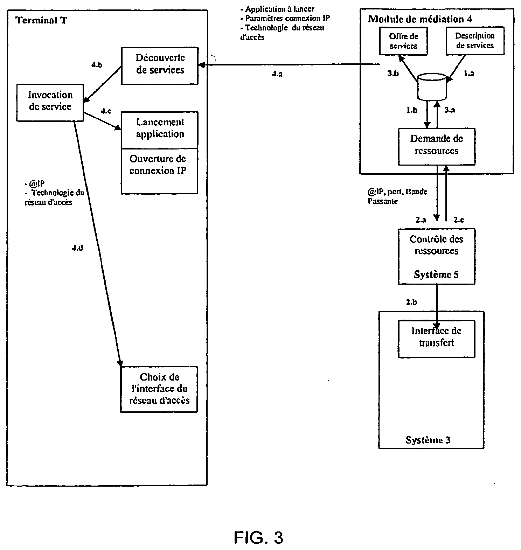

Les étapes du procédé d'accès conforme à l'invention vont maintenant être décrites en détail en regard de la figure 3 relativement à un accès multiinterfaces.

On décrit ici l'exemple de diffusion du service IP multicast sur un réseau d'accès DAB, le terminal pouvant recevoir potentiellement des services multicast sur plusieurs interfaces réseaux correspondant à des technologies différentes.
1.a - Le fournisseur de services IP souhaite distribuer son service IP jusqu'à des terminaux clients, tel que le terminal T. Pour cela, il fait appel au module 4 de médiation, lequel peut être sous-traité chez un tiers ou intégré chez le fournisseur de service. Pour cela, le serveur S fournit à la fonction "Description de services" du module 4 les éléments de description de son service IP.
   Les éléments fournis sont ceux que l'on trouve dans un fichier de description SDP (RFC 327 de l'IETF) standard: à savoir:
   - des informations de niveau applicatif: nom et description littérale du service, date de diffusion du service, application nécessaire pour décoder le service, type de codecs, etc,
   - des données de niveau réseau: adresse IP multicast et port UDP nécessaire pour communiquer avec le service IP multicast.

   En plus des informations de description de service, le fournisseur de services fournit, s'il y a lieu, ses préférences en terme de technologie réseau d'accès (exemple : si possible DAB, sinon DVB) et d'autres informations complémentaires afin de compléter le cas échéant la demande de ressources effectuée en 1.b, par exemple pour un service IP multicast désiré sur une technologie DAB : le label du service radio auquel le service IP est rattaché, la bande passante nécessaire, la zone géographique ou le service sera opéré, l'opérateur de réseau d'accès souhaité, etc.
   La fonction "Description de services" du système 4 stocke la description du service dans la base de données du système.
1.b - La fonction «Demande de ressources» du module 4 de médiation est informée de l'existence d'un nouveau service IP pour lequel une demande de ressources est nécessaire. La fonction «Demande de ressources» doit alors sélectionner la technologie du réseau d'accès, voire l'opérateur de réseau d'accès. Le choix définitif de la technologie du réseau d'accès peut être fait en fonction des choix du fournisseur de services, des règles comme les contrats avec des opérateurs d'accès, des informations de charge de réseaux d'accès, des facteurs de coût.
   Il faut noter qu'un même service IP peut être transporté simultanément sur plusieurs réseaux d'accès de technologie différente, par exemple les signalisations DAB et DVB. Dans ce cas, on peut envisager que le module 4 de médiation établisse un ordre de priorité des différentes technologies, le terminal T se voyant imposer cette priorité. Une autre solution consiste en ce que la priorité est définie par le terminal T lui-même.
   La fonction «Demande de ressources» doit ensuite sélectionner les informations qui caractériseront auprès de l'opérateur du réseau 1 d'accès la demande de ressources: par exemple les adresses IP et port du flux IP, et un certain nombre d'éléments complémentaires comme la bande passante désirée.
2.a - La fonction "Activation des ressources" du système 5 reçoit la demande de ressources.
2.b - Au cas où la demande est recevable, par exemple si la bande passante nécessaire est disponible dans les ressources d'accès DAB, le système 5 envoie des ordres vers les équipements 3 de transfert afin que le service IP puisse être transporté sur le réseau d'accès.
2.c - En réponse à la demande de ressources effectuée en 2.a, la fonction «Contrôle de ressources» confirme l'attribution des ressources.
3.a - La fonction "Demande de ressources" du système 4 met à jour la base de données du système en ajoutant à la description du service IP le champ "technologie du réseau d'accès" qui définit la technologie du réseau d'accès employée, ou des réseaux d'accès employés accompagnés éventuellement de la priorité associée, s'il y en a plusieurs réseaux d'accès possibles comme indiqué en 1.b. Pour le cas d'un réseau d'accès DAB, ce champ sera égal par exemple à «DAB».
3.b - La fonction "Offre de services" du module 4 est informée qu'elle doit créer un fichier de découverte de services associé au service IP. Si la découverte de services est faite au travers d'un fichier SDP, ce fichier contiendra les champs présents dans la base de données et reçus par la fonction découverte de services (champs d'un fichier SDP standard) et le nouveau champ « technologie du réseau d'accès ». Ce champ est placé dans une description SDP de niveau média, au cas où il y aurait plusieurs médias et donc plusieurs flux IP associés au service IP.
4.a - Le terminal client T par sa fonction "Découverte de services" découvre le service IP :
   - soit en envoyant une requête auprès de la fonction "Offre de services" du module 4, en téléchargeant par exemple le fichier SDP sur un serveur WEB mis à jour par la fonction "Offre de services" du module 4,
   - soit par l'envoi des informations par la fonction "Offre de services" vers le terminal T au travers d'un protocole comme SAP/SDP (RFC 2974).
4.b - La fonction "Invocation de service", qui peut être sollicitée au moment où l'utilisateur sélectionne sur l'interface graphique du terminal T le service IP (clic sur un icône par exemple), traite le fichier de découverte de services (fichier SDP par exemple), et donc le champ « technologie du réseau d'accès ».
4.c - La fonction "Invocation de service" du terminal T lance l'application en lui fournissant les paramètres présents dans le fichier de découverte de services et qui lui sont nécessaires. Grâce aux paramètres de communication IP (classiquement adresse(s) IP et port), l'application ouvre la connexion IP.
4.d - La fonction "Invocation de service" fournit à la fonction "Choix de l'interface du réseau d'accès" l'indication que le service IP d'adresse @ doit être obtenu au travers d'une interface du terminal T correspondant au champ "technologie du réseau d'accès". Pour l'exemple d'un service IP multicast, la fonction « Choix de l'interface du réseau d'accès » modifie les paramètres de configuration réseau du terminal, de façon à ce que l'abonnement multicast soit fait sur l'interface appropriée correspondant aux priorités définies par le module 4 de médiation ou localement par le terminal T. A noter qu'une autre possibilité pour les services IP multicast serait que la fonction "Lancement de l'application" identifie l'interface à laquelle l'application devra elle-même s'abonner pour consommer le service IP, en fonction du champ « technologie du réseau d'accès » fourni par la fonction « Invocation de service ».

Une fois réalisée la sélection de l'interface du réseau d'accès d'une manière où d'une autre, les données IP issues du serveur S au travers des équipements du réseau 1 d'accès physique sont reçues par la carte de réception du terminal T et traitées par l'application désirée (lecteur de vidéo par exemple).

A noter que les cas « multicanal » et « multiinterfaces » peuvent être cumulatifs ; si le réseau d'accès défini par le module de médiation est multicanal, l'identifiant de canal sera transmis au terminal lors de la découverte de services en même temps que l'identifiant de voie. La fonction « Choix de l'interface du réseau d'accès » relaiera alors vers la bonne interface du réseau d'accès multicanal l'identifiant du canal.

## Revendications

1. Procédé d'accès, à travers un réseau (1) d'accès multivoies, d'un terminal (T) à un service mis à disposition sur un réseau (2) de communication par un fournisseur de services,
**caractérisé en ce que** ledit procédé d'accès comprend les étapes consistant :
- pour le fournisseur de services, à fournir à un module (4) de médiation des informations concernant au moins des données relatives à l'adresse (@, *P)* dudit service dans le réseau (2) de communication,
- pour le module (4) de médiation, à déterminer au moins un identifiant de voie à utiliser par le terminal (T) pour accéder audit service, et à associer ledit identifiant de voie auxdites informations fournies par le fournisseur (S) de services,
- pour le terminal (T), à recevoir du module (4) de médiation, lors de la découverte du service, ledit identifiant de voie associé auxdites informations.

2. Procédé selon la revendication 1, **caractérisé en ce que**, le réseau d'accès multivoies étant un réseau d'accès multicanal, ledit identifiant de voie comprend, au moins, un identifiant de localisation du canal à utiliser par le terminal dans ledit réseau d'accès multicanal.

3. Procédé selon la revendication 2, **caractérisé en ce que** le module (4) de médiation détermine le réseau (1) d'accès multicanal à utiliser, et reçoit dudit réseau d'accès ledit identifiant de localisation.

4. Procédé selon l'une des revendications 2 ou 3, **caractérisé en ce que** ledit réseau d'accès multicanal est un réseau utilisant la signalisation DVB.

5. Procédé selon l'une des revendications 2 ou 3, **caractérisé en ce que** ledit identifiant de canal comprend en outre un identifiant de la technologie dudit réseau d'accès multicanal.

6. Procédé selon la revendication 5, **caractérisé en ce que** ledit réseau d'accès multicanal est un réseau utilisant la signalisation DAB.

7. Procédé selon l'une quelconque des revendications 2 à 6, **caractérisé en ce que** ledit terminal (T) s'accorde sur le canal correspondant audit identifiant de voie.

8. Procédé selon la revendication 1, **caractérisé en ce que**, le réseau d'accès multivoies étant constitué par une pluralité d'interfaces du terminal à des réseaux d'accès, ledit identifiant de voie est un identifiant d'au moins une technologie à utiliser.

9. Procédé selon la revendication 8, **caractérisé en ce que** le module (4) de médiation détermine la technologie d'accès à utiliser.

10. Procédé selon la revendication 9, **caractérisé en ce que**, en cas de pluralité de technologies aptes à être utilisées, le module (4) de médiation définit une priorité desdites technologies.

11. Procédé selon la revendication 9, **caractérisé en ce que**, en cas de pluralité de technologies aptes à être utilisées, le terminal (T) définit une priorité desdites technologies.

12. Procédé selon l'une quelconque des revendications 9 à 11, **caractérisé en ce que**, en cas de pluralité d'interfaces pour une technologie donnée, le terminal (T) détermine l'interface à utiliser.

13. Procédé selon l'une quelconque des revendications 8 à 12, **caractérisé en ce que** ledit terminal (T) se connecte sur l'interface réseau correspondant audit identifiant de voie.

14. Procédé selon l'une quelconque des revendications 1 à 13, **caractérisé en ce que** les informations reçues par le module (4) de médiation provenant du fournisseur de service concernent également des données relatives au service.

15. Système d'accès, à travers un réseau (1) d'accès multivoies, d'un terminal (T) à un service mis à disposition sur un réseau (2) de communication par un fournisseur de services,
**caractérisé en ce que** ledit système d'accès comprend un module (4) de médiation apte :
- à recevoir du fournisseur de services des informations concernant au moins des données relatives à l'adresse (@, *P*) dudit service dans le réseau (2) de communication,
- à déterminer au moins un identifiant de voie à utiliser par le terminal (T) pour accéder audit service, et à associer ledit identifiant de voie auxdites informations fournies par le fournisseur (S) de services,
- à fournir au terminal (T), lors de la découverte du service, ledit identifiant de voie associé auxdites informations.

16. Système d'accès selon la revendication 15, **caractérisé en ce que**, le réseau d'accès étant un réseau d'accès multicanal, le module (4) de médiation est apte à déterminer le réseau (1) d'accès multicanal à utiliser, et reçoit dudit réseau d'accès un identifiant de localisation du canal à utiliser par le terminal (T).

17. Système d'accès selon la revendication 15, **caractérisé en ce que**, le réseau d'accès multivoies étant constitué par une pluralité d'interfaces du terminal à des réseaux d'accès, le module (4) de médiation est apte à déterminer la technologie d'accès à utiliser.

18. Module de médiation pour un système d'accès, à travers un réseau (1) d'accès multivoies, d'un terminal (T) à un service mis à disposition sur un réseau (2) de communication par un fournisseur de services,
**caractérisé en ce que** ledit module (4) de médiation est apte :
- à recevoir du fournisseur de services des informations concernant au moins des données relatives à l'adresse (@, P) dudit service dans le réseau (2) de communication,
- à déterminer au moins un identifiant de voie à utiliser par le terminal (T) pour accéder audit service, et à associer ledit identifiant de voie auxdites informations fournies par le fournisseur (S) de services,
- à fournir au terminal (T), lors de la découverte du service, ledit identifiant de voie associé auxdites informations.

19. Module de médiation selon la revendication 18, **caractérisé en ce que**, le réseau d'accès étant un réseau d'accès multicanal, le module (4) de médiation est apte à déterminer le réseau (1) d'accès multicanal à utiliser, et reçoit dudit réseau d'accès un identifiant de localisation du canal à utiliser par le terminal (T).

20. Module de médiation selon la revendication 18, **caractérisé en ce que**, le réseau d'accès multivoies étant constitué par une pluralité d'interfaces du terminal à des réseaux d'accès, le module (4) de médiation est apte à déterminer la technologie d'accès à utiliser.

21. Terminal (T) apte à accéder à travers un réseau (1) d'accès multivoies à un service mis à disposition sur un réseau (2) de communication par un fournisseur de services, **caractérisé en ce que** ledit terminal est apte à recevoir d'un module de médiation, lors de la découverte du service, au moins un identifiant de voie à utiliser par le terminal (T) pour accéder audit service, associé à des informations concernant au moins des données relatives à l'adresse (@, P) dudit service dans le réseau (2) de communication.

22. Terminal selon la revendication 21, **caractérisé en ce que** ledit terminal (T) est apte à s'accorder sur le canal correspondant audit identifiant de voie.

23. Terminal selon la revendication 21, **caractérisé en ce que** ledit terminal (T) est apte à se connecter sur l'interface réseau correspondant audit identifiant de voie.

## Patentansprüche

1. Verfahren zum Zugreifen durch ein mehrkanaliges Zugangsnetz (1) eines Endgeräts (T) auf einen Dienst, der auf einem Kommunikationsnetz (2) von einem Dienstanbieter bereitgestellt wird,
**dadurch gekennzeichnet, dass** das Zugriffsverfahren die Schritte umfasst, die aus Folgendem bestehen:
- für den Dienstanbieter, Liefern an ein Vermittlungsmodul (4) der Informationen, die mindestens Daten in Zusammenhang mit der Adresse (@, P) des Diensts in dem Kommunikationsnetz (2) betreffen,
- für das Vermittlungsmodul (4), Bestimmen mindestens eines Kanalidentifikators, den das Endgerät (T) verwenden soll, um auf den Dienst zuzugreifen, und Verbinden des Kanalidentifikators mit den Informationen, die von dem Dienstanbieter (S) geliefert werden,
- für das Endgerät (T), Empfangen von dem Vermittlungsmodul (4) bei dem Entdecken des Diensts, des Kanalidentifikators, der mit den Informationen verbunden ist.

2. Verfahren nach Anspruch 1, **dadurch gekennzeichnet, dass** das mehrkanalige Zugangsnetz ein Multikanal-Zugangsnetz ist, wobei der Kanalidentifikator mindestens einen Lageidentifikator des von dem Endgerät in dem Multikanal-Zugangsnetz zu verwendenden Kanals umfasst.

3. Verfahren nach Anspruch 2, **dadurch gekennzeichnet, dass** das Vermittlungsmodul (4) das zu verwendende Multikanal-Zugangsnetz (1) bestimmt und von dem Zugangsnetz den Lageidentifikator empfängt.

4. Verfahren nach einem der Ansprüche 2 oder 3, **dadurch gekennzeichnet, dass** das Multikanal-Zugangsnetz ein Netz ist, das die DVB-Signalisierung verwendet.

5. Verfahren nach einem der Ansprüche 2 oder 3, **dadurch gekennzeichnet, dass** der Kanalidentifikator außerdem einen Identifikator der Technologie des Multikanal-Zugangsnetzes umfasst.

6. Verfahren nach Anspruch 5, **dadurch gekennzeichnet, dass** das Multikanal-Zugangsnetz ein Zugangsnetz ist, das die DAB-Signalisierung verwendet.

7. Verfahren nach einem der Ansprüche 2 bis 6, **dadurch gekennzeichnet, dass** sich das Endgerät (T) auf den Kanal abstimmt, der dem Kanalidentifikator entspricht.

8. Verfahren nach Anspruch 1, **dadurch gekennzeichnet, dass**, da das mehrkanalige Zugangsnetz aus einer Vielzahl von Schnittstellen des Endgeräts mit Zugangsnetzen besteht, der Kanalidentifikator ein Identifikator mindestens einer zu verwendenden Technologie ist.

9. Verfahren nach Anspruch 8, **dadurch gekennzeichnet, dass** das Vermittlungsmodul (4) die zu verwendende Zugriffstechnologie bestimmt.

10. Verfahren nach Anspruch 9, **dadurch gekennzeichnet, dass** in dem Fall der Vielzahl von Technologien, die zum Verwenden geeignet sind, das Vermittlungsmodul (4) eine Priorität der Technologien definiert.

11. Verfahren nach Anspruch 9, **dadurch gekennzeichnet, dass** in dem Fall der Vielzahl von Technologien, die zum Verwenden geeignet sind, das Endgerät (T) eine Priorität der Technologien definiert.

12. Verfahren nach einem der Ansprüche 9 bis 11, **dadurch gekennzeichnet, dass** in dem Fall der Vielzahl von Schnittstellen für eine gegebene Technologie, das Endgerät (T) die zu verwendende Schnittstelle bestimmt.

13. Verfahren nach einem der Ansprüche 8 bis 12, **dadurch gekennzeichnet, dass** sich das Endgerät (T) an die Netzschnittstelle, die dem Kanalidentifikator entspricht, anschließt.

14. Verfahren nach einem der Ansprüche 1 bis 13, **dadurch gekennzeichnet, dass** die Informationen, die von dem Vermittlungsmodul (4) empfangen werden, die von dem Dienstanbieter stammen, auch Daten in Zusammenhang mit dem Dienst betreffen.

15. System für das Zugreifen durch ein mehrkanaliges Zugangsnetz (1) eines Endgeräts (T) auf einen Dienst, der auf einem Kommunikationsnetz (2) durch einen Dienstanbieter bereitgestellt wird,
**dadurch gekennzeichnet, dass** das Zugriffssystem ein Vermittlungsmodul (4) umfasst, das geeignet ist:
- von dem Dienstanbieter Informationen, die mindestens Daten in Zusammenhang mit der Adresse (@, P) des Diensts in dem Kommunikationsnetz (2) betreffen, zu empfangen,
- mindestens einen Kanalidentifikator, der von dem Endgerät (T) zu verwenden ist, um auf den Dienst zuzugreifen, zu bestimmen, und den Kanalidentifikator mit den Informationen, die von dem Dienstanbieter (S) geliefert werden, zu verbinden,
- an das Endgerät (T) bei dem Entdecken des Diensts den Kanalidentifikator, der mit den Informationen verbunden ist, zu liefern.

16. Zugriffssystem nach Anspruch 15, **dadurch gekennzeichnet, dass**, da das Zugangsnetz ein Multikanal-Zugangsnetz ist, das Vermittlungsmodul (4) geeignet ist, das zu verwendende Multikanal-Zugangsnetz (1) zu bestimmen, und von dem Zugangsnetz einen Lageidentifikator des Kanals, der von dem Endgerät (T) zu verwenden ist, empfängt.

17. Zugriffssystem nach Anspruch 15, **dadurch gekennzeichnet, dass**, da das mehrkanalige Zugangsnetz aus einer Vielzahl von Schnittstellen des Endgeräts mit Zugangsnetzen besteht, das Vermittlungsmodul (4) geeignet ist, die zu verwendende Zugriffstechnologie zu bestimmen.

18. Vermittlungsmodul für ein Zugriffssystem durch ein mehrkanaliges Zugangsnetz (1) eines Endgeräts (T) zu einem Dienst, der auf dem Kommunikationsnetz (2) von einem Dienstanbieter bereitgestellt wird,
**dadurch gekennzeichnet, dass** das Vermittlungsmodul (4) geeignet ist:
- von dem Dienstanbieter Informationen zu empfangen, die mindestens Daten in Zusammenhang mit der Adresse (@, P) des Diensts in dem Kommunikationsnetz (2) betreffen,
- mindestens einen Kanalidentifikator, der von dem Endgerät (T) zu verwenden ist, um auf den Dienst zuzugreifen, zu bestimmen und den Kanalidentifikator mit den Informationen zu verbinden, die von dem Dienstanbieter (S) geliefert werden,
- an das Endgerät (T) bei dem Entdecken des Diensts den Kanalidentifikator, der mit den Informationen verbunden ist, zu liefern.

19. Vermittlungsmodul nach Anspruch 18, **dadurch gekennzeichnet, dass**, da das Zugangsnetz ein Multikanal-Zugangsnetz ist, das Vermittlungsmodul (4) geeignet ist, das zu verwendende Multikanal-Zugangsnetz (1) zu bestimmen und von dem Zugangsnetz einen Lageidentifikator des Kanals, den das Endgerät (T) verwenden soll, empfängt.

20. Vermittlungsmodul nach Anspruch 18, **dadurch gekennzeichnet, dass**, da das mehrkanalige Zugangsnetz aus einer Vielzahl von Schnittstellen des Endgeräts mit Zugangsnetzen besteht, das Vermittlungsmodul (4) geeignet ist, die zu verwendende Zugriffstechnologie zu bestimmen.

21. Endgerät (T), das geeignet ist, durch ein mehrkanaliges Zugangsnetz (1) auf einen Dienst zuzugreifen, der auf einem Kommunikationsnetz (2) von einem Dienstanbieter bereitgestellt wird, **dadurch gekennzeichnet, dass** das Endgerät geeignet ist, von einem Vermittlungsmodul bei dem Entdecken des Diensts mindestens einen Kanalidentifikator zu empfangen, den das Endgerät (T) verwenden soll, um auf den Dienst zuzugreifen, verbunden mit Informationen, die mindestens Daten in Zusammenhang mit der Adresse (@, P) des Diensts in dem Kommunikationsnetz (2) betreffen.

22. Endgerät nach Anspruch 21, **dadurch gekennzeichnet, dass** das Endgerät (T) geeignet ist, sich auf den Kanal, der dem Kanalidentifikator entspricht, abzustimmen.

23. Endgerät nach Anspruch 21, **dadurch gekennzeichnet, dass** das Endgerät (T) geeignet ist, sich an die Netzschnittstelle, die dem Kanalidentifikator entspricht, anzuschließen.

## Claims

1. Method for accessing, through a multi-path access network (1), from a terminal (T), a service made available over a communication network (2) by a service provider,
**characterized in that** said access method comprises the steps consisting:
- for the service provider, in supplying a mediation module (4) for the information concerning at least data relating to the address (@,P) of said service in the communication network (2),
- for the mediation module (4), in determining at least one path identifier to be used by the terminal (T) to access said service, and in associating said path identifier with said information supplied by the service provider (S),
- for the terminal (T), in receiving, from the mediation module (4), upon the discovery of the service, said path identifier associated with said information.

2. Method according to Claim 1, **characterized in that**, the multi-path access network being a multichannel access network, said path identifier comprises, at least, a location identifier of the channel to be used by the terminal in said multichannel access network.

3. Method according to Claim 2, **characterized in that** the mediation module (4) determines the multichannel access network (1) to be used, and receives said location identifier from said access network.

4. Method according to one of Claims 2 or 3, **characterized in that** said multichannel access network is a network using DVB signalling.

5. Method according to one of Claims 2 or 3, **characterized in that** said channel identifier further comprises an identifier of the technology of said multichannel access network.

6. Method according to Claim 5, **characterized in that** said multichannel access network is a network using DAB signalling.

7. Method according to any one of Claims 2 to 6, **characterized in that** said terminal (T) tunes to the channel corresponding to said path identifier.

8. Method according to Claim 1, **characterized in that**, the multi-path access network consisting of a plurality of interfaces from the terminal to access networks, said path identifier is an identifier of at least one technology to be used.

9. Method according to Claim 8, **characterized in that** the mediation module (4) determines the access technology to be used.

10. Method according to Claim 9, **characterized in that**, in the case of a plurality of technologies suitable for use, the mediation module (4) defines a priority of said technologies.

11. Method according to Claim 9, **characterized in that**, in the case of a plurality of technologies suitable for use, the terminal (T) defines a priority of said technologies.

12. Method according to any one of Claims 9 to 11, **characterized in that**, in the case of a plurality of interfaces for a given technology, the terminal (T) determines the interface to be used.

13. Method according to any one of Claims 8 to 12, **characterized in that** said terminal (T) connects over the network interface corresponding to said path identifier.

14. Method according to any one of Claims 1 to 13, **characterized in that** the information received by the mediation module (4) originating from the service provider relates also to data relating to the service.

15. System for accessing, through a multi-path access network (1), from a terminal (T), a service made available over a communication network (2) by a service provider,
**characterized in that** said access system comprises a mediation module (4) suitable:
- for receiving, from the service provider, information concerning at least data relating to the address (@, *P*) of said service in the communication network (2),
- in determining at least one path identifier to be used by the terminal (T) to access said service, and in associating said path identifier with said information supplied by the service provider (S),
- in supplying to the terminal (T), upon the discovery of the service, said path identifier associated with said information.

16. Access system according to Claim 15, **characterized in that**, the access network being a multichannel access network, the mediation module (4) is suitable for determining the multichannel access network (1) to be used, and receives, from said access network, a location identifier of the channel to be used by the terminal (T).

17. Access system according to Claim 15, **characterized in that**, the multi-path access network consisting of a plurality of interfaces from the terminal to access networks, the mediation module (4) is suitable for determining the access technology to be used.

18. Mediation module for a system for accessing, through a multi-path access network (1), from a terminal (T), a service made available over a communication network (2) by a service provider, **characterized in that** said mediation module (4) is suitable:
- for receiving, from the service provider, information concerning at least data relating to the address (@, *P*) of said service in the communication network (2),
- in determining at least one path identifier to be used by the terminal (T) to access said service, and in associating said path identifier with said information supplied by the service provider (S),
- in supplying to the terminal (T), upon the discovery of the service, said path identifier associated with said information.

19. Mediation module according to Claim 18, **characterized in that**, the access network being a multichannel access network, the mediation module (4) is suitable for determining the multichannel access network (1) to be used, and receives, from said access network, a location identifier of the channel to be used by the terminal (T).

20. Mediation module according to Claim 18, **characterized in that**, the multi-path access network consisting of a plurality of interfaces from the terminal to access networks, the mediation module (4) is suitable for determining the access technology to be used.

21. Terminal (T) suitable for accessing, through a multi-path access network (1), a service made available over a communication network (2) by a service provider, **characterized in that** said terminal is suitable for receiving, from a mediation module, upon the discovery of the service, at least one path identifier to be used by the terminal (T) to access said service, associated with information concerning at least data relating to the address (@, P) of said service in the communication network (2).

22. Terminal according to Claim 21, **characterized in that** said terminal (T) is suitable for tuning to the channel corresponding to said path identifier.

23. Terminal according to Claim 21, **characterized in that** said terminal (T) is suitable for connecting to the network interface corresponding to said path identifier.
